# EUROPÄISCHE PATENTSCHRIFT

(11) **EP 0 624 390 B1**
(45) Veröffentlichungstag und Bekanntmachung des Hinweises auf die Patenterteilung: **28.08.1996**
(21) Anmeldenummer: 94102054.7
(22) Anmeldetag: 10.02.1994
(51) Int. Cl.: B01D 39/08, D04H 1/54

(54) **Verfahren zur Herstellung eines Vliesstoffes für ein Filterband**
Method for making a fiber fleece for a belt filter
Procédé de fabrication d'une nappe de fibres pour un filtre à bande

(30) Priorität: 13.05.1993 DE 4316017
(43) Veröffentlichungstag der Anmeldung: 17.11.1994
(73) Patentinhaber: Firma Carl Freudenberg, D-69469 Weinheim (DE)
(72) Erfinder: Buchwald, Holger, D-69502 Hemsbach (DE); Schmitt, Hermann-Josef, D-64658 Fürth (DE); Dorner, Michael, D-69469 Weinheim (DE)

(56) Entgegenhaltungen:
- EP-A- 0 171 806
- WO-A-93/01880
- US-A- 4 112 037
- PATENT ABSTRACTS OF JAPAN vol. 15, no. 104 (C-0814) 13. März 1991 & JP-A-03 000 860 (UNITIKA LTD.) 7. Januar 1991

## Beschreibung

Die Erfindung betrifft einen Vliesstoff, welcher als Filterband, insbesondere zur Feinfiltration von Kühlschmierstoffen in der metallverarbeitenden und metallherstellenden Industrie, Verwendung findet. Ferner wird ein Verfahren zur Herstellung des Filterbandes beschrieben.

DE 41 28 396 beschreibt einleitend, weswegen Kunststoff-Gewebebänder für die Filtration von Bearbeitungsflüssigkeiten immer mehr durch Vliesstoffe ersetzt werden. Ausschlaggebend hierfür sind das Anwachsen des Feinschmutzpegels in der Bearbeitungsflüssigkeit bei Gewebebändern sowie die nachteiligen, kurzen Regenerationsintervalle.

Vliesstoffe hingegen erreichen eine verbesserte Filtratqualität und eine höhere Filterfeinheit, jedoch sind Aufwand und Betriebskosten erheblich höher; die Entsorgung der verbrauchten Vliesstoffe stellt ein Umweltproblem dar. Die genannte Druckschrift schlägt nun vor, grobmaschiges Trägergewebe mit feinporigem Filtergewebe zu verbinden, um ein Doppelfilterband herzustellen. Der Nachteil dieses "Sandwich-Pakets" besteht darin, daß solche Gewebe sehr teuer sind und das notwendige Klebenetz die offene Filterfläche wesentlich reduziert.

In "Industrie-Anzeiger" 10/1991, Seiten 20 bis 21, wird als Bandfilter ein auf einen Spaltsiebboden aufgelegter Faservliesstoff beschrieben, welcher Späne ab einer Größe von 20 bis 30 µm zurückhält. Wenn der Filterkuchen 3 mm Dicke erreicht hat, wird der Vliesstoff aus den Unterdruckfiltern ausgetragen, der Filterkuchen durch Schwerkraft abgetrennt und der verbrauchte Vliesstoff aufgewickelt und entsorgt. Die Vliesstoffrollen sind nicht wiederverwendbar.

Den bekannten Vliesstoff-Filterbändern ist gemeinsam, daß sie nicht selbsttragend sind und daher stets auf einem Zwischenboden oder einem Gewebe aufliegen müssen. Die Vliesstoffe werden entweder im Naßlegeverfahren, im Trockenlegeverfahren oder im Spinnverfahren aus Endlosfilamenten erzeugt. Der Einsatz solcher Filter im Reversierbetrieb ist lediglich zwei- bis viermal möglich; dann werden die Filterband-Oberflächen faserig und zeigen Aufrauherscheinungen, welche letztendlich zum Festigkeitsverlust und zu nicht mehr ausreichender Regenerierfähigkeit führen.

US-A-4112037 beschreibt ein Filterband aus Vliesstoff sowie ein Verfahren zu dessen Herstellung, wobei man ein Gelege aus thermoplastischen Stapelfasern mit einem stabilisierendem Film, z.B. aus Organopolysiloxan, beschichtet, den Verbund so preßt, daß die Beschichtung an den Faserkreuzungspunkten bricht, und anschließend die Fasern durch Wärmeeinwirkung an diesen Kreuzungspunkten miteinander verschweißt. Der Beschichtungsfilm bleibt dabei außerhalb der Regionen der Faserkreuzungen unbeschädigt. Durch diese Maßnahme soll die Reißfestigkeit des Filterbandes verbessert werden. Eine festere Fasereinbindung des Vliesstoffs mit Bindemittelbesichtung reduziert wegen der größeren Dichte die Luftdurchlässigkeit und Porengröße des Filters auf nicht mehr zur Funktion ausreichende Werte.

WO 93/01880 befaßt sich mit einem Blutfiltermaterial, insbesondere zur Trennung von Leukocyten aus Blutfraktionen. Dieses Material kann ein Gewebe oder ein Vliesstoff sein, wobei bei letzterem der Faserverbund durch die thermische Verschweißung der niedriger als die Kerne schmelzenden Fasermäntel gefestigt wird.

Aus den genannten Gründen werden Vliesstoffe daher für Umlaufbänder überhaupt nicht verwendet.

Aus EP-A-0171806 ist es bekannt, Wundverbände oder Windeln aus Vliesstoff dadurch abriebfester und auch bezüglich ihrer Zugfestigkeit stärker zu gestalten, daß man einen thermisch gebundenen Vliesstoff aus mindestens 10 % Kern/Mantel-Fasern mit gegebenenfalls weiteren Baumwoll-, Kunstseide-, Nylon-, Polyolefin- oder Polyester-Fasern in Abmischung herstellt. Hierzu wird eine lose Lage aus den Fasern gebildet, welche anschließend durch Wasserstrahlen vernadelt und miteinander verschlungen werden. Es folgt die Einwirkung einer Temperatur, welche nur die Fasermäntel anschmilzt, wobei das Vlies unter minimaler Druckeinwirkung verbleibt. Nach dem Abkühlen sind die Kern/Mantelfasern mit ihrer niedriger als der Kern schmelzenden Mantelkomponente an den Kreuzungspunkten miteinander oder mit anderen Fasern verbunden. Die restlichen Fasern tragen selbst zu dieser thermischen Verbindung nicht bei; sie sollen eine ausreichende Länge aufweisen, um nicht während des Wasserstrahlvernadelns ausgewaschen werden zu können. Diese Wasserstrahlen wirken mit Drucken von 100 bis 600 psi auf den Vliesstoff ein.

Der Erfindung liegt die Aufgabe zugrunde, unter Verzicht auf ein Filter-Gewebe einen Vliesstoff anzugeben, welcher selbsttragend als Filtertuch sowohl im Reversier- als auch im Umlaufbetrieb verwendet werden kann, welcher also mehrfach - und dabei auch möglichst vollständig - regenerierbar ist, ohne die Oberflächengüte durch Ausfaserung dabei zu verlieren. Dabei soll das Filterband mindestens 500 Filterzyklen ohne bedeutend nachlassende Filtereigenschaften oder mechanische Verluste überstehen können. Partikeln bis hinab zu 20 µm müssen dabei jeweils quantitativ abgeschieden werden können. Die erforderliche dauerhafte Regenerierbarkeit bringt eine sehr gute Aufrauhbeständigkeit der Vliesstoffoberfläche. Ein solches Filterband sollte universell sowohl für die Flüssigfiltration als auch bei entsprechenden Staubfiltrations-Verfahren einsetzbar sein. Ferner soll ein Verfahren angegben werden, wie ein solches Filterband herzustellen ist.

Zur Lösung der Aufgabe wird ein Vliesstoff von 30 g/m² bis 100 g/m² vorgeschlagen, welcher 55 bis 100 Gew.% Kern/Mantel-Fasern oder -Filamente enthält, wobei die restlichen Fasern homofil aufgebaut sind. Die Auswahl der Mehrkomponentenfasern ist nicht kritisch; das Mantelmaterial weist dabei einen niedrigeren Erweichungsbereich als das Kernmaterial auf. Die restlichen Fasern dürfen erst - wenn überhaupt - bei einer Temperatur thermisch aktivierbar sein, welche erheblich höher als die Erweichungstemperatur des Mantelmaterials der obigen Bikomponentenfasern ist. Der Vliesstoff ist in sich durch Wasserstrahlen verfestigt.

Die Erfindung besteht darin, daß der Vliesstoff in Längs- und Querrichtung durch eingearbeitete Mono- oder Multifilamente (Garne) verstärkt ist, welche in jeder Richtung ein Flächengewicht von 5 bis 30 g/m² aufweisen. Diese Filamente bestehen zweckmäßig aus dem Werkstoff des Kerns der Kern/Mantel-Fasern.

Die niedriger schmelzenden Mäntel der erstgenannten Fasern oder Filamente sind an den sie umgebenden Fasern und Filamenten in den jeweiligen Berührungszonen angeschweißt.

Die Porengröße der sehr glatten Oberfläche dieses Bandfilters beträgt mindestens 30 µm im Durchmesser, gemessen mit dem Coulter-Porometer. Die Luftdurchlässigkeit nach DIN 53887 liegt bei mindestens 800 dm³/s m² (bei 0,5 mbar).

Nach 300 Scheuerzyklen in einem noch anzugebenden Testverfahren (nasser Zustand) ergibt die visuelle Beurteilung der Oberflächenglätte immer noch die Bestnote; d.h. herausgelöste Fasern sind nicht zu erkennen.

Zur Herstellung des erfindungsgemäßen Filterbandes wird in an sich bekannter Weise ein Faserflor von 30 g/m² bis 100 g/m² aus 55 bis 100 Gew.-% Kern/Mantel-Fasern oder -Filamenten hergestellt. Der Rest sind homofile Fasern, die auf keinen Fall im Erweichungsbereich der Mantelmaterialien der anderen Fasern bereits thermisch aktivierbar sein dürfen. Der Faserflor wird mit hochenergetischen Wasserstrahlen verfestigt, welche diesen von oben und unten durchdringen bei jeweiligen Einzeldurchmessern von etwa 100 µm, einem Strahldruck um 100 bar und einer Düsendichte von 250/cm und so analog einem herkömmlichen Nadelvorgang die Verfestigung zu einem Vliesstoff bewirken.

Erfindungsgemäß wird anschließend der so vorgefertigte Vliesstoff mittels einer Raschelmaschine und in Kettenwirktechnik in Längs- und Querrichtung mit Mono- oder Multifilamenten, also Garnen, in einer Menge von jeweils 5 bis 30 g/m² in sich verstärkt. Zweckmäßig verwendet man dabei Filament-Titer von 30 dtex bis 200 dtex. Diese Garne dürfen bei der weiteren Herstellung nicht erweichen.

Dann wird der so verstärkte Vliesstoff in an sich bekannter Weise einem Thermoofen zugeführt, worin der Mantel der Kern/Mantel-Filamente oder -Fasern unter leichtem Druck während oder direkt nach der Wärmebeaufschlagung angeschmolzen wird. An den Berührungspunkten des Mantelmaterials mit den umgebenden Fasern entsteht dabei ein klebender Verbund zwischen den Fasern und den Filamenten, wobei die Druckbeaufschlagung auf die Oberflächen bügelnd und glättend wirkt, da alle Oberflächenfasern eingebunden werden. Die Enddicken des Filterbandes können 0,15 bis 0,50 mm betragen. Es verbindet die guten Eigenschaften bisher verwendetener Gewebe mit den Filterqualitäten des Vliesstoffs.

Was nicht ohne weiteres erwartet werden konnte, ist die erreichbare Kombination hoher Luftdurchlässigkeitswerte mit hohen Kraft/Dehnungs-Moduln bei gleichzeitig großer Aufrauhresistenz. Vermutlich liegt dies daran, daß in unorthodoxer Weise erst nach dem Raschelvorgang die thermische Glättung der Oberflächen vorgenommen wird, was zu nachstehenden vorteilhaften Eigenschaften führt:

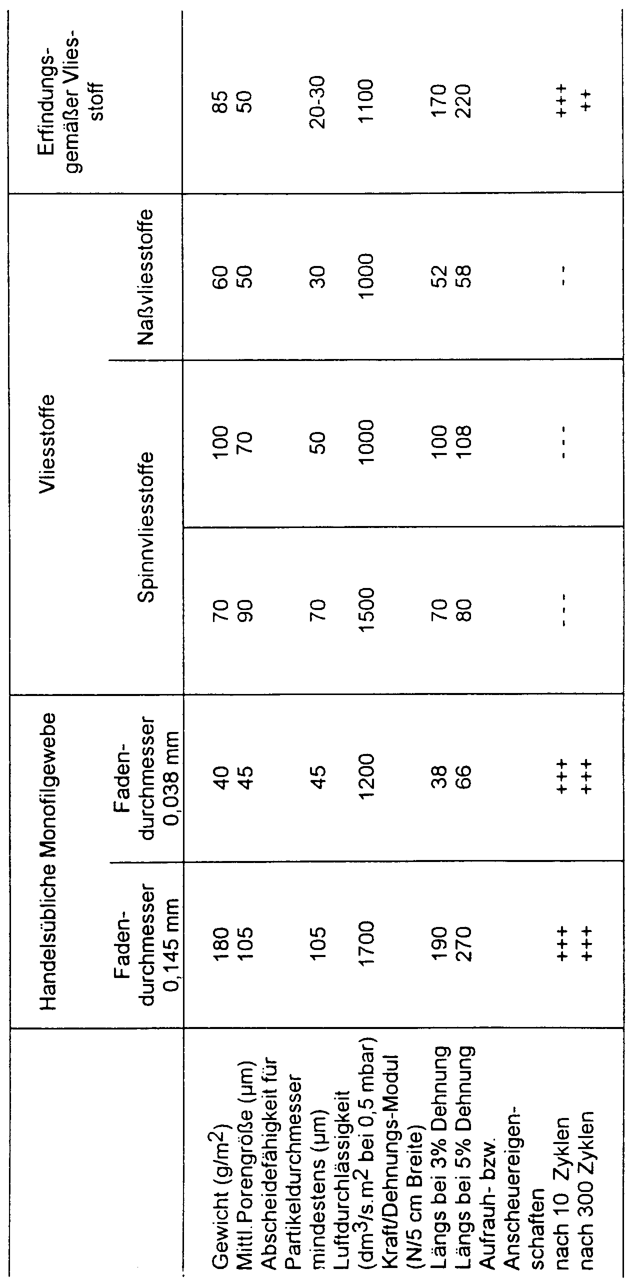

Folgende Eigenschaften eines Filterbandes werden gefordert:
a) Mechanische Eigenschaften:
   - Maximale Festigkeit nach DIN 53857,: längs: Über 300 N/5 cm Breite
   quer: Über 150 N/5 cm Breite
   - Kraft/Dehnungs-Modul: längs: Unter 5% bei 200 N/5 cm Breite, das entspricht 400 kp/m Arbeitsbreite.
   Anscheuer- bzw.Aufrauheigenschaften der Bandoberfläche:
   Hier verwendet die Anmelderin eine eigene Testmethode zur Bestimmung der Oberflächenfestigkeit und des Pillverhaltens:
   Eine Prüffläche von 39 cm² des Vliesstoffs wird mit einem Scheuermedium behandelt:
   Scheuermedium: Haareinlage, Wien 65-6522 der Firma Biederlack, W-4407 Emsdetten
   Scheuerdruck: 6 N/cm²
   Scheuerzyklen: 300
   Zustand des Prüflings: Naß
   Die Beurteilung nach Abschluß der Scheuerzyklen erfolgt visuell anhand einer Benotungsvorlage, wobei +++ den besten Wert bezeichnet, nämlich auch nach der Behandlung überhaupt kein Herauslösen von Fasern zu beobachten, während --- ein extremes Hervorstehen nahezu aller Oberflächenfasern bezeichnet.
b) Filtertechnische Eigenschaften:
   Abscheideleistung: Größer als 20 µm Partikelgröße
   Durchschnittliche Porengröße: Mindestens 30 µm ⌀ (Coulter-Porometer)
   Luftdurchlässigkeit nach DIN 53887: Mindestens 800 dm³/s m² bei 0,5 mbar.

Auf dieser Grundlage ist aus der Tabelle ersichtlich, daß handelsübliche Filtergewebe aus grobtitrigen Monofilamenten (erste Spalte) zwar gute Werte in Luftdurchlässigkeit, Kraft/Dehnungs-Moduln und Aufrauh-/Anscheuerverhalten zeigen, jedoch erst Partikel ab 105 µm Durchmesser aufwärts abscheiden können.

Feinertitrige Filtergewebe mit Filamentdurchmessern von 0,038 mm weisen natürlich bessere Abscheidefähigkeiten für feine Partikel auf, jedoch sind die Kraft/Dehnungs-Werte für Filterbänder - ohne stützende Maßnahmen - indiskutabel niedrig. Eine sehr gute Aufrauhbeständigkeit ist jedoch gegeben.

Entsprechende Daten für in der Flüssigfiltration eingesetzte Vliesstoffe, wie sie in der Beschreibung des Standes der Technik eingangs genannt wurden, zeigen gute Abscheidefähigkeiten für Feinpartikel bei ebenfalls guten Luftdurchlässigkeitswerten. Bereits die Kraft/Dehnungs-Werte jedoch befriedigen nicht die hohen mechanischen Anforderungen an im Umlaufbetrieb eingesetzte Filterbänder. Die Aufrauheigenschaften schließlich lassen klar erkennen, daß nach zwei bis vier Zyklen die Oberflächen in einem Maße verschlissen sind, daß die Filterbänder ausgetauscht werden müssen. Dies trifft sowohl für Naß- als auch für Spinnvliesstoffe zu, wie die Tabelle zeigt.

Erst mit einem erfindungsgemäßen Vliesstoff (rechte Spalte) kann das Dilemma zwischen hohem Kraft/Dehnungs-Modul einerseits und bester Aufrauhbeständigkeit andererseits gelöst werden bei gleichzeitiger Fähigkeit, bereits Mikropartikeln von 20 bis 30 µm Durchmesser abscheiden zu können, ohne die gängigen Luftdurchlässigkeitswerte zu verlassen.

Filterbänder mit diesen Eigenschaften können problemlos bei der Flüssigfiltration sowohl in Schwerkraftbandfiltern als auch in Druckband- oder Vakuumfiltern eingesetzt werden, wobei ihr Einsatz sowohl den reversiblen als auch den Umlaufbetrieb gestattet. 500 Zyklen sind dabei ohne nennenswertes Nachlassen der Oberflächengüte, der Filterleistung oder der Festigkeit erzielbar.

Die genannten vorteilhaften Eigenschaften des Vliesstoffs machen diesen auch für die Anwendung als Luftfilter bei der Oberflächen- oder Staubkuchen-Filtration geeignet, bei denen ebenfalls der Filterkuchen periodisch vom Filtermedium wieder abgereinigt wird.

## Patentansprüche

1. Verfahren zur Herstellung eines Filterbandes aus Vliesstoff, zu dessen Herstellung man einen Faserflor von 30 g/m² bis 100 g/m² aus 55 bis 100 Gew.% Kern/Mantel-Fasern oder -Filamenten vorsieht, wobei das Mantelmaterial einen Erweichungsbereich unter demjenigen des Kernmaterials aufweist, wobei man gegebenenfalls als restliche Fasern homofile, bei Temperaturen um den Erweichungsbereich des Mantelmaterials nicht aktivierbare Fasern verwendet und wobei man diesen Faserflor beidseitig mit hochenergetischen Wasserstrahlen verfestigt, welche einen Durchmesser von etwa 100 µm und einen Druck um 100 bar aufweisen bei einer Düsendichte von 250/cm, dadurch gekennzeichnet, daß man in einem anschließenden Arbeitsgang in den Vliesstoff mittels einer Raschelmaschine und in Kettenwirktechnik in Längs- und Querrichtung hochfeste Mono- oder Multifilamente in einer Menge von jeweils 5 bis 30 g/m² einarbeitet, welche bei der nachfolgenden thermischen Behandlung nicht erweichen, und daß man in einem dritten Arbeitsgang den so verstärkten Vliesstoff in einem Thermoofen behandelt und darin unter leichtem Druck bei oder direkt nach der Wärmebeaufschlagung führt, bei welcher das Mantelmaterial seine Erweichungstemperatur erreicht und dadurch ein inniger, schmelzender Verbund von Fasern und Filamenten sowie eine von hervorstehenden Fasern freie Oberfläche entstehen.

## Claims

1. A process for manufacturing a nonwoven filter belt from a fibre web of 30 g/m² to 100 g/m² containing 55 to 100% by weight of core-sheath fibres or filaments, the sheath material having a softening range below that of the core material and any other fibres present being homofil and not activable at temperatures around the softening range of the sheath material, wherein the fibre web is consolidated from both sides with high-energy water jets which have a diameter of about 100 µm and a pressure around 100 bar coupled with a jet density of from 250/cm, characterized in that, in a subsequent operation, the nonwoven has incorporated into it, by means of a Raschel machine and warp-knitting, in an amount of 5 to 30 g/m² in both the longitudinal and the transverse direction, high-tenacity mono- or multifilaments that do not soften in the subsequent thermal treatment, and in that, in a third operation, the nonwoven thus reinforced is treated in a heating oven and guided therein under light pressure during or directly after the heat treatment wherein the sheath material reaches its softening temperature, thereby creating an intimate, melting bond between fibres and filaments and a surface free of protruding fibres.

## Revendications

1. Procédé de fabrication d'un filtre à bande à partir d'une nappe de fibres, pour la fabrication de laquelle on prévoit un voile de fibres de 30 g/m² à 100 g/m² composé à partir de 55 à 100 % en poids de fibres ou de filaments âme/gaine, la matière de la gaine présentant une plage d'amollissement inférieure à celle de la matière du noyau, par lequel on utilise, le cas échéant, comme fibres résiduelles des fibres homophiles, ne pouvant pas être activées à des températures avoisinant la plage d'amollissement de la matière de la gaine et par lequel on durcit ce voile de fibres des deux côtés avec des jets d'eau de haute énergie, lesquels présentent un diamètre d'environ 100 µm et une pression de 100 bar, avec une densité de tuyère d'environ 250/cm, caractérisé en ce que, au cours d'une étape de travail suivante, on enfonce dans la nappe de fibres, dans le sens longitudinal et le sens transversal, à l'aide d'un métier Raschel et selon la technique de tricotage chaîne, des mono- et des multifilaments dans une quantité de 5 à 30 g/m², lesquels ne ramollissent pas lors du traitement thermique consécutif, et en ce que, au cours d'une troisième étape de travail, on traite la nappe de fibres ainsi renforcée dans un thermofour et on la guide dedans sous faible pression lors de l'admission de chaleur ou directement après, au cours de laquelle la matière de la gaine atteint sa température d'amollissement et de cette façon, se forment une liaison intime et en liquescence des fibres et des filaments ainsi qu'une surface exempte de fibres en saillie.
